Europäisches Patentamt

European Patent Office

Office européen des brevets

(11) Veröffentlichungsnummer: **0 348 745**
**A2**

(12) **EUROPÄISCHE PATENTANMELDUNG**

(21) Anmeldenummer: 89110851.6

(51) Int. Cl.⁴: **G03B 42/04 , G03C 3/00**

(22) Anmeldetag: 15.06.89

(30) Priorität: 28.06.88 DE 3821746

(43) Veröffentlichungstag der Anmeldung:
03.01.90 Patentblatt 90/01

(84) Benannte Vertragsstaaten:
FR GB IT

(71) Anmelder: **Agfa-Gevaert AG**

**D-5090 Leverkusen 1(DE)**

(72) Erfinder: **Schmidt, Manfred, D. I.**
**Ligusterweg 34**
**D-8011 Kirchheim(DE)**
Erfinder: **Zanner, Johann**
**Albert-Schweitzer-Strasse 1 A**
**D-8025 Unterhaching(DE)**

(54) **Lichtdichte, aufreissbare Umhüllung für Stapel fotografischer Blattfilme.**

(57) Eine lichtdichte, aufreißbare Umhüllung für Stapel fotografischer oder röntgenologischer Blattfilme zum Einsetzen in ein Vorratsmagazin eines Blattfilmkassetten-Beladegerätes, wobei das Vorratsmagazin an der der aufreißbaren Umhüllungsseite gegenüberliegenden Seite eine Abziehborrichtung, vorzugsweise eine Aufwickelvorrichtung zum Entfernen der Umhüllung durch Angreifen an einer Aufwikkellasche derselben nach dem Verschließen des Vorratsmagazins aufweist und wobei eine umgeschlagene Verschlußlasche der Umhüllung an einer Umhüllungsflachseite lösbar gehalten ist, ist so ausgebildet, daß an der Umhüllungsflachseite (4c) eine flache Tasche (4d) oder Schlaufe angebracht ist, in die die umgeschlagene Verschlußlasche (4b) einsteckbar ist. Dadurch wird erreicht, daß beim Einsetzen in ein Magazin die Umhüllung lichtdicht ist und trotzdem bei ihrem Abziehen vom Stapel kein Klebestreifen aufgerissen werden muß.

Fig. 3

## Lichtdichte, aufreißbare Umhüllung für Stapel fotografischer Blattfilme

Die Erfindung betrifft eine lichtdichte, aufreißbare Umhüllung für Stapel fotografischer oder röntgenologischer Blattfilme zum Einsetzen in ein Vorratsmagazin eines Blattfilmkassetten-Beladegerätes, wobei das Vorratsmagazin an der der aufreißbaren Umhüllungsseite gegenüberliegenden Seite eine Abziehborrichtung, vorzugsweise eine Aufwikkelvorrichtung zum Entfernen der Umhüllung durch Angreifen an einer Aufwickellasche derselben nach dem Verschließen des Vorratsmagazins aufweist und wobei eine umgeschlagene Verschlußlasche der Umhüllung an einer Umhüllungsflachseite lösbar gehalten ist.

Blattfilmstapel mit derartigen Umhüllungen sind im Handel erhältlich. Dabei muß die Umhüllung in einer Dun kelkammer geöffnet und der der Umhüllung entnommene Filmpack in das Vorratsmagazin eingelegt werden. Demgegenüber wird heute angestrebt, einen lichtdicht in der Umhüllung angeordneten Filmpack bei Tageslicht in ein Vorratsmagazin einzulegen und nach dem Schließen des Magazins die Hülle zu öffnen und vom Filmpack abzuziehen.

Ein Vorratsmagazin dieser Art ist durch die DE-GMS 77 25 804 bekannt. Dabei wird die Aufreißlasche der Umhüllung durch die labyrinthartig ineinandergefalteten Enden der Flachseiten der Umhüllung gebildet, wobei die Faltung unter dem Zug, den die Aufwickelvorrichtung beim Drehen auf die Aufwickellasche ausübt, auseinandergerissen werden soll, so daß die Umhüllung dann vom Stapel beim weiteren Drehen der Aufwickelvorrichtung abgezogen und aufgewickelt werden soll. Es hat sich jedoch herausgestellt, daß der aufbringbare Kraftaufwand an der Aufwickelvorrichtung nicht ausreicht, um die Aufreißlasche tatsächlich auseinanderzureißen. Somit ist diese bekannte Anordnung für einen Tageslichtbetrieb, also für das Beladen des Magazins und Öffnen der Umhüllung im wieder geschlossenen Magazin nicht brauchbar.

Durch die DE-PS 34 05 423 sind Vorratsmagazine ähnlicher Art bekannt geworden. Der eine der hier gezeigten Magazintypen setzt zum Öffnen der Stapelumhüllung das Zusammenwirken mit der Vorrichtung, in der das Magazin verwendet werden soll, voraus und ist daher nur in besonders ausgestalteten Vorrichtungen und nicht allgemein verwendbar. Beim anderen hier beschriebenen Maga zin liegen die Verhältnisse so wie beim Magazin nach der DE-GMS 77 25 804, nur mit dem Unterschied, daß die gefaltete Aufreißlasche der Umhüllung nicht durch Aufwicklung der Aufwickellasche, sondern durch Ziehen an der Aufwickellasche von Hand erfolgen muß. Die Kraft zum Aufreißen der gefalteten Aufreißlasche ist aber praktisch kaum aufzubringen.

In der DE-OS 35 43 024 ist ein Vorratsmagazin beschrieben, das eine messer- oder sägeähnliche Abreißleiste für die Aufreißlasche von Filmpackumhüllungen nach dem Schließen des Magazins aufweist. Diese Ausbildung stellt nicht nur einen zusätzlichen Aufwand am Vorratsmagazin dar. Sie hat den Nachteil daß eine Tageslichtbeladung eben nur bei entsprechend ausgebildeten Magazinen möglich ist, während Filmpacks zum Beladen der verschiedensten Arten von bekannten Magazinen, z.B. auch nach der DE-GMS 77 25 804, bei Tageslicht brauchbar sein sollen.

Schließlich sind in der DE-PS 36 12 710 Umhüllungen der eingangs genannten Art gezeigt, bei denen wenigstens eine starke, auch die durch das Gewicht des Stapels bedingte hohe Zugkraft aushaltende Aufreißlasche von Hand entfernbar ist und dazwischen oder darunter durch eine geringe, an der Verschlußlasche bzw. der Umhüllung angreifende Zugkraft zerreißbare Haltestreifen angeordnet sind. Diese Ausbildung ist wegen der zwei verschiedenen, nämlich verschieden starken Verklebungen und ihrer Zuordnung zueinander herstellungsmäßig aufwendig.

Der Erfindung liegt die Aufgabe zugrunde, bei Umhüllungen der eingangs genannten, insbesondere der letztgenannten Art, die leicht zerreißbaren Haltestreifen durch in der Serienfertigung einfacher herstellbare und keine bestimmte Zuordnung zu den reißfesteren Aufreißlaschen erfordernde, sowie ohne Zerreißen voneinander zu lösende Mittel zu ersetzen.

Diese Aufgabe wird erfindungsgemäß gelöst durch die Merkmale der beiden Nebenansprüche 1 und 2. Weitere vorteilhafte Merkmale der Erfindung sind den Unteransprüchen entnehmbar.

Die Erfindung wird anhand von Zeichnungen näher erläutert. Es zeigen

Fig. 1 bis 4 perspektivische, nicht maßstäbliche Darstellungen mehrerer Stellungen einer erfindungsgemäßen Filmpackhülle,

Fig. 5 eine perspektivische Darstellung einer Filmpackhülle nach Figur 1 beim Einlegen in ein Vorratsmagazin,

Fig. 6 einen abgebrochenen Schnitt durch ein geöffnetes Vorratsmagazin mit eingelegter, ungeöffneter, erfindungsgemäßer Filmpackhülle,

Fig. 7 den Schnitt nach Figur 6 nach dem Aufreißen eines Verschlußteiles der Filmpackhülle,

Fig. 8 den Schnitt nach den Figuren 6 und 7 nach dem Schließen des Vorratsmagazins beim Entfernen der Filmpackhülle,

Fig. 9 bis 11 perspektivische Darstellungen mehrerer Stellungen einer anderen Ausführungsform einer erfindunsgemäßen Filmpackhülle.

Es wurden bereits Vorratsmagazine verwendet, die aus einer oben nur teilweise offenen Box 2a und einem als Schieberrohr 2b ausgebildeten Dekkel bestehen. Die Eingabeöffnung 2c der Box 2a liegt dabei der in Eingaberichtung 3 des Magazins 2 in eine Kassettenbeladevorrichtung liegenden Stirnseite 2h der Box 2a benachbart. Die Eingabeöffnung 2c ist nur so groß, daß ein Filmstapel 1 oder Filmpack in die Box 2a einsetzbar und darin positionierbar ist und daß sie im vorgeschobenen Zustand des Schieberrohrs 2b durch dieses lichtdicht verschließbar ist. Die in Eingaberichtung 3 rückwärtige Magazinstirnseite 2d kann als Griffteil zum Einschieben des Magazins 2 in eine Beladevorrichtung und zum Entnehmen aus ihr ausgebildet sein. Die rückwärtige Magazinstirnseite 2d ist als abklappbare, in ihrem angeklappten Zustand lichtdicht schließende Rückwand ausgebildet. In ihr oder unmittelbar hinter ihr im Innern der Box 2a ist eine Aufwickelwelle 6 an den Seitenwänden gelagert. Sie weist Befestigungsmittel auf, mit denen eine Aufwickellasche 4a einer neu eingelegten Umhüllung 4 eines Filmstapels 1 an der Aufwickelwelle 6 zu befestigen ist. Die Aufwickelwelle 6 kann direkt oder über Zahnräder mit einer lichtdicht auf der Box 2a nach außen geführten Aufwickelkurbel 10 gekuppelt sein. Letztere kann ein klappbares, nicht gezeigtes Gelenk aufweisen, so daß sie in die gezeigte Funktionsstellung oder in eine in eine Vertiefung 2c der Rückwand 2d eingeschwenkte Nichtgebrauchslage schwenkbar ist. Letztere Nichtgebrauchslage soll sie beim Einsetzen des Magazins 2 in eine Beladevorrichtung einnehmen.

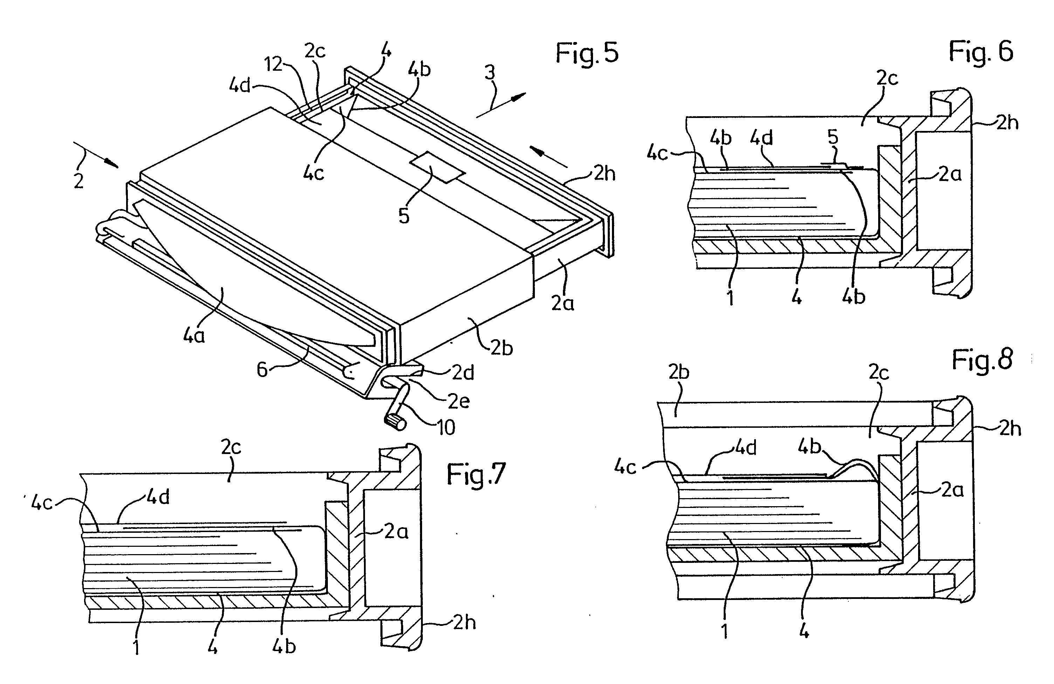

Zur Wiederbeladung eines Magazins 2 werden sowohl die Eingabeöffnung 2c durch Öffnen des Schiebedeckels 2b als auch die Aufwickelwelle 6 durch Öffnen der Rückwand 2d freigelegt. Dann werden von der Aufwickelwelle 6 die dort aufgewickelte Umhüllung 4 des bereits entnommenen Filmstapels abgezogen und aus der Box ein unter dem entleerten Stapel 1 vorgesehener Versteifungs- und Haltekarton 12 entnommen. Letzterer weist an der Rückseite einen hochstehenden Anschlag auf. Der Haltekarton 12 samt Anschlag dient dazu, beim Abziehen der Hülle 4 vom Stapel in einem geschlossenen Magazin 2 eine Verschiebung des Stapels 1 oder einzelner seiner Blätter durch Mitnahme durch die Umhüllung 4 zu verhindern. Gemäß den Figuren 5 und 6 wird ein neuer Filmstapel 1 samt Umhüllung 4 durch die Eingabeöffnung 2c in die Box 2a eingelegt, wobei die Aufwickellasche 4a bis in den Bereich der Aufwickelwelle 6 festgeklemmt wird. Danach wird die Rückwand 2d geschlossen.

Dabei ist die in der vorn noch geöffneten Box 2a liegende Hülle 4 noch völlig verschlossen. Damit sie aber nach dem Schließen des Magazindek-

kels 2b allein durch Drehen der Kurbel 10 und der Aufwickelwelle 6 aufgeris sen und vom Stapel 1 abgezogen werden kann, ist der Verschluß der Hülle 4 besonders ausgebildet.

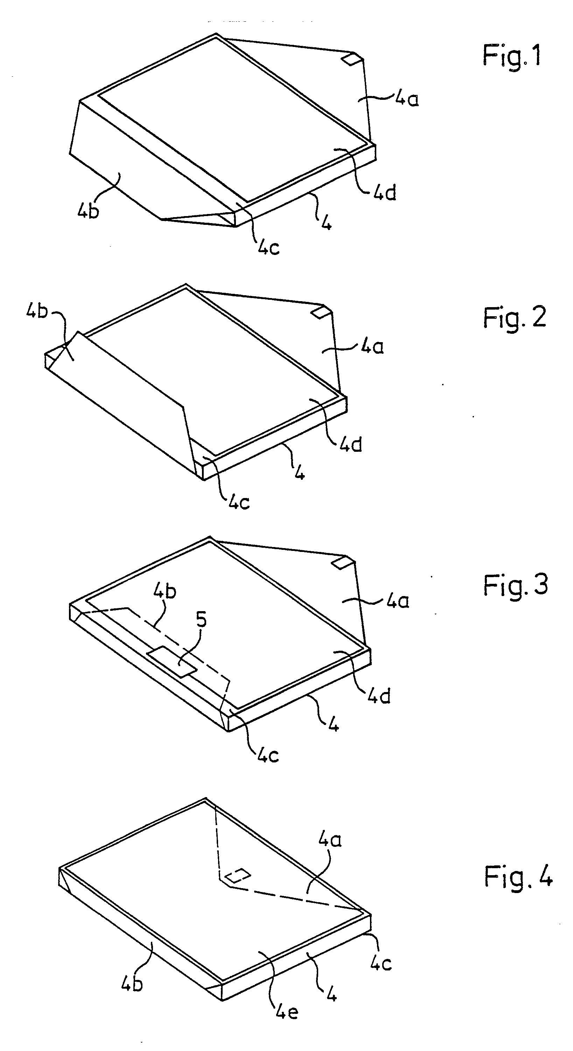

An ihrem zu öffnenden, stirnseitigen Anfang ist ein vorstehender Verschlußlappen 4b in die obenliegende Umhüllungsflachseite 4c umgeschlagen, um dadurch einen Lichtschutz zu bilden. Gemäß den Figuren 1 bis 3 und 5 bis 8 ist auf die Flachseite 4c mit etwas Abstand von der verschlußlappenseitigen Umhüllungsstirnseite ein etwa über die übrige Flachseite 4 reichendes Stück aus Verpackungsmaterial vorzugsweise Umhüllungsfolie, als Tasche 4d oder Schlaufe aufgeklebt oder aufgeschweißt oder dergl. Bei taschenartiger Ausbildung sind die zwei Längsseiten und die aufwickellaschenseitige Querseite des Stückes mit der Flachseite 4c verbunden, bei schlaufenartiger Ausbildung nur die zwei Längsseiten. Wie die Figuren 1 bis 3 und 5 bis 8 zeigen, wird der Verschlußlappen 4b gefaltet, so daß er eine trapezförmige Gestalt erhält, dann in die Flachseite 4c eingeschlagen und mit seiner Stirnkante in die Tasche 4d oder Schlaufe eingeschoben, bis er flach darin liegt. Damit ist der Verschlußlappen 4b im in ein Magazin 2 eingelegten Zustand ausreichend gegen unbeabsichtigtes Aufgehen gesichert. In dieser Lage wird dann noch die Taschenoberfläche 4d mit der Verschlußlaschenaußenseite durch ein sehr reißfestes Klebeband 5 verklebt. Die Reißfestigkeit dieses Klebebandes 5 ist ausreichend, um die Umhüllung 4 auch beim Tragen des darin enthaltenen schweren Stapels gegen Aufreißen zu sichern.

Dieses Klebeband 5 wird nach dem Einlegen des Stapels 1 in das geöffnete Magazin 2 (vgl. Fig. 5 und 6) von Hand abgerissen, wie dies an sich bekannt ist. Dann wird das Magazin geschlossen, vgl. Fig. 8. Wenn nun an der Umhüllung 4 durch Ziehen an der Aufwickellasche 4a bzw. deren Aufwickeln langsam gezogen wird, dann wird die Verschlußlasche 4b aus der Tasche 4d oder Schlaufe gezogen und entfaltet sich, so daß die hiermit geöffnete Umhüllung 4 vom Stapel 1 in an sich bekannter Weise abgezogen werden kann.

Diese Ausbildung hat den Vorteil, daß für die Herstellung der Tasche 4d kein anderes Material benötigt wird als für die Umhüllung 4 selbst und nur ein zusätzlicher Schweiß- oder Klebevorgang erforderlich ist. Außerdem muß nach dem Entfernen bzw. Öffnen des Klebebandes 5 von Hand beim Öffnen der Umhüllung 4 im geschlossenen Magazin 2 nicht noch einmal ein, wenn auch leichter reißendes Verschlußstück aufgerissen werden. Zum Ziehen der Verschlußlasche 4b aus der Tasche 4d und zum Auffalten der Verschlußlasche 4b sind daher wesentlich geringere Kräfte erforderlich als zum bisher bekannten Aufreißen von Verschlußteilen der Umhüllung 4.

Wie Figur 4 zeigt, kann es sinnvoll sein, auf der der Flachseite 4c gegenüberliegenden Flachseite ebenfalls eine Einstecktasche 4e oder - schlaufe anzubringen. In diese wird dann zum Transport und zur Lagerung der Filmpacks die Aufwickellasche 4a eingesteckt, so daß sie beim Nichtgebrauch nicht lose über den Filmpack vorhängt.

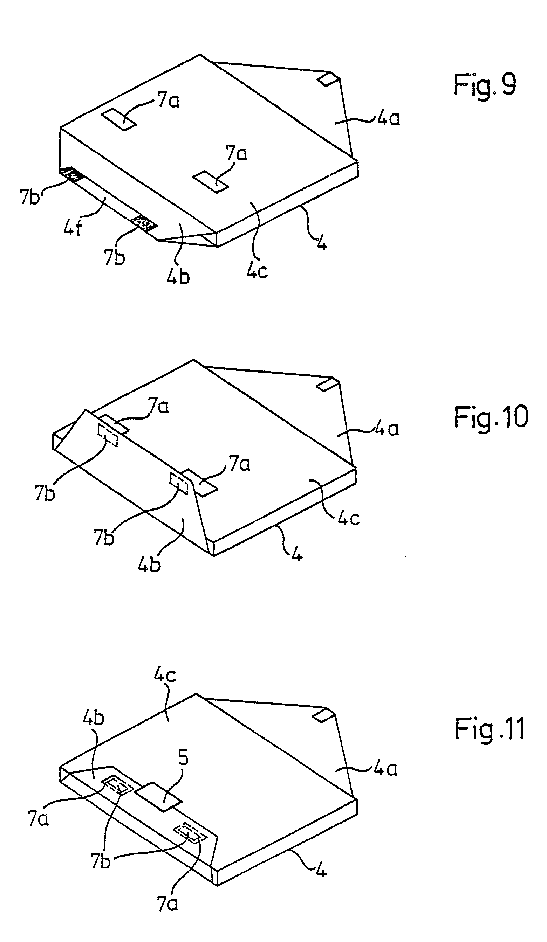

In den Figuren bis 11 ist noch ein anderes Ausführungsbeispiel gezeigt. Auch hier ist vermieden, daß beim Abziehen der Umhüllung 4 vom Stapel 1 im geschlossenen Magazin 2 eine Sicherung für die Verschlußlasche 4b zerrissen werden muß. An die Stelle der Tasche 4d treten jedoch Klettbandstreifen 7a, 7b in der Flachseite 4c. Nachdem hierbei das offene Ende der Verschlußlasche 4b nicht durch die Tasche 4d gegen Lichteinfall gesichert ist, muß die offene Stirnseite der Verschlußlasche wenigstens einmal am Rand 4f umgefaltet werden. Dementsprechend müssen die Klettbandteile 7b so angeordnet sein, daß sie in der Lage nach Figuren 10 und 11 auf die Klettbandteile 7a treffen. Auch diese Klettbandbefestigung 7a, 7b läßt sich wesentlich leichter öffnen als sich ein Klebestreifen abreißen läßt. Auch diese Verpackung ist zum Transport und vor Gebrauch noch mit einem reißfesten Klettband 5 gegen unbeabsichtigtes Öffnen gesichert.

Beide Ausführungsbeispiele haben den zusätzlichen Vorteil daß die Umhüllung 4 bei Bedarf in einer Dunkelkammer geöffnet, einige Blattfilme entnommen und die Umhüllung zum Einsetzen in ein Magazin wieder verschlossen werden können.

## Ansprüche

1. Lichtdichte, aufreißbare Umhüllung für Stapel fotografischer oder röntgenologischer Blattfilme zum Einsetzen in ein Vorratsmagazin eines Blattfilmkassetten-Beladegerätes, wobei das Vorratsmagazin an der der aufreißbaren Umhüllungsseite gegenüberliegenden Seite eine Abziehvorrichtung, vorzugsweise eine Aufwickelvorrichtung zum Entfernen der Umhüllung durch Angreifen an einer Aufwickellasche derselben nach dem Verschließen des Vorratsmagazins aufweist und wobei eine umgeschlagene Verschlußlasche der Umhüllung an einer Umhüllungsflachseite lösbar gehalten ist, dadurch gekennzeichnet, daß an der Umhüllungsflachseite (4c) eine flache Tasche (4d) oder Schlaufe angebracht ist, in die die umgeschlagene Verschlußlasche (4b) einsteckbar ist.

2. Lichtdichte, aufreißbare Umhüllung für Stapel fotografischer oder röntgenologischer Blattfilme zum Einsetzen in ein Vorratsmagazin eines Blattfilmkassetten-Beladegerätes, wobei das Vorratsmagazin an der der aufreißbaren Umhüllungsseite gegenüberliegenden Seite eine Abziehvorrichtung, vorzugsweise eine Aufwickelvorrichtung zum Entfernen der Umhüllung durch Angreifen an einer Aufwickellasche derselben nach dem Verschließen des Vorratsmagazins aufweist und wobei eine umgeschlagene Verschluß lasche der Umhüllung an einer Umhüllungsflachseite lösbar gehalten ist, dadurch gekennzeichnet, .daß an der Umhüllungsflachseite (4c) und dem dieser zugewandten, umgeschlagenen Teil (4f) der Verschlußlasche (4b) miteinander in Eingriff bringbare Klettbandteile (7a, 7b) angeordnet sind.

3. Umhüllung nach Anspruch 1 oder 2, dadurch gekennzeichnet, daß die Verschlußlasche (4b) mit der Tasche (4d) oder Schlaufe bzw. mit der Umhüllungsflachseite (4c) durch einen von Hand aufreißbaren stabilen Klebestreifen (5) zusätzlich verklebt ist.

4. Umhüllung nach einem der vorhergehenden Ansprüche, dadurch gekennzeichnet, daß an der Umhüllungsflachseite, die der der Halterung für die Verschlußlasche (4d) dienenden Umhüllungsflachseite (4c) gegenüberliegt, eine weitere Tasche (4e) oder Schlaufe zum Einstecken der Aufwickellasche (4a) angeordnet ist.

Fig.1

4a

4b

4c

4d

4

Fig. 2

4b

4a

4c

4d

4

Fig.3

4b

5

4a

4c

4d

4

Fig. 4

4a

4b

4e

4c

4

A-G 5385

Fig. 6

Fig. 8

Fig. 5

Fig. 7

Fig. 9

Fig. 10

Fig. 11

A-G 5385